# EUROPEAN PATENT SPECIFICATION

(11) **EP 2 451 125 B1**
(45) Date of publication and mention of the grant of the patent: **17.02.2016**
(21) Application number: 09847719.3
(22) Date of filing: 11.09.2009
(51) Int. Cl.: H04L 12/70, H04L 12/751, H04L 29/12

(54) **METHOD AND SYSTEM FOR REALIZING NETWORK TOPOLOGY DISCOVERY**
VERFAHREN UND SYSTEM ZUR ERKENNUNG EINER NETZWERKTOPOLOGIE
PROCÉDÉ ET SYSTÈME D EXÉCUTION DE DÉCOUVERTE DE TOPOLOGIE DE RÉSEAU

(30) Priority: 28.07.2009 CN 200910152093
(43) Date of publication of application: 09.05.2012
(73) Proprietor: ZTE Corporation, Shenzhen, Guangdong 518057 (CN)
(72) Inventor: TIAN, Jing, Shenzhen Guangdong 518057 (CN); ZHU, Qihui, Shenzhen Guangdong 518057 (CN)
(74) Representative: Manitz, Finsterwald & Partner GbR
(86) International application number: PCT/CN2009/073895
(87) International publication number: WO 2011/011933

(56) References cited:
- WO-A2-2007/125430
- WO-A2-2008/012471
- WO-A2-2008/050061
- CN-A- 1 458 760
- CN-A- 1 949 784
- DE-A1-102007 036 962

## Description

### Technical Field

The present invention relates to communication and network management field, and specifically to a method and system for realizing network topology discovery in the network management.

### Background of the Related Art

With the arrival of information age, people's dependence on computer networks makes the reliability of running of the computer networks themselves very important. Therefore, a higher demand for network management is raised. A main object of network topology discover is to obtain and maintain existence information of network nodes and information of connection relationships between them, and, on the basis of this, to draw a topology diagram of the whole network. On the basis of the network topology diagram, network managers can locate fault nodes in the network fast.

Although there are many methods for discovering automatically network topology, they can come down to the following three types: a simple network management protocol (SNMP) based network topology discovery method, which is the network layer topology discovery; a general protocol based network topology discovery method, which is the link layer topology discovery; and a routing protocol based network topology discovery method, which is the routing layer topology discovery.

The principle of the network layer topology discovery is to inspect active devices in specified networks in combination with the internet control message protocol (ICMP) and the address resolution protocol (ARP) and the SNMP to obtain all the active devices, and obtain basic information of the devices by the SNMP, and determines types of the devices based on the basic information to obtain detailed information of corresponding devices based on the types of the devices.

The principle of the network layer topology discovery is to determine a connection relation between each switch based on a Cisco (the Cisco system company is a supplier of enterprise network products) discovery protocol (CDP) neighbor table, port index (ifIndex) and port corresponding table, self-learning table of the switch.

The principle of the router layer topology discovery is to trance route all of the device nodes, and obtain a routing topology relation between related devices based on a returned routing path.

At present, there are more and more applications where an IP address is assigned to each client in the LAN by a dynamic host configuration protocol (DHCP) server so as to provide network services for the client, the three methods mentioned above need to be equipped with a special system to implement network topology discovery, the scheme of which is relatively complicated and the pertinence is not strong, thereby resulting in extremely low performance-price ratio of the system.

The features of the preamble of the independent claims are known from DE 10 2007. 036962 A1.

### Content of the Invention

A technical problem to be solved by the present invention is to provide a method and a system for realizing network topology discovery as defined in the independent claims, so as to implement the network topology discovery specially for application scenarios where a DHCP server provides services for a client.

In order to solve the above technical problem, the present invention provides a method for realizing network topology discovery, which relates to a dynamic host configuration protocol (DHCP) client, a plurality of intermediate devices and a DHCP server and comprises:
the intermediate devices recording successively address information of the intermediate devices into a DHCP option of a message in a DHCP message request sent by the DHCP client when receiving the message; and
when receiving the message, the DHCP server storing a physical address of the DHCP client and information in the DHCP option carried in the message, while assigning an IP address to the DHCP client.

Further, the intermediate devices recording successively the address information of the intermediate devices into the DHCP option of the message when receiving the message comprises:
when the message passes by a first intermediate device, the first intermediate device adding the DHCP option into the message, and recording an IP address of the first intermediate device connected to the DHCP client into the fifth sub-option of the DHCP option, in addition to recording port information of the first intermediate device into the first sub-option of the DHCP option and recording a physical address of the first intermediate device into the second sub-option of the DHCP option; and
when the message passes by other intermediate devices, intermediate devices which receive the message recording IP address of the intermediate devices into the fifth sub-option of the DHCP option of the message successively.

Further, the method also comprises:
The DHCP server determining and storing position information of the DHCP client based on the physical address of the DHCP client and the information in the DHCP option, and determining and storing the plurality of intermediate devices between the DHCP client and the DHCP server and connection relations between the intermediate devices based on the information in the DHCP option.

Further, the method also comprises:
the DHCP server drawing a detailed network topology diagram based on the stored position information of the DHCP client and the intermediate devices and the connection relations between the intermediate devices.

Further, the method also comprises:
the DHCP server sending the position information of the DHCP client and the intermediate devices and the connection relations between the intermediate devices to a topology analysis system, which draws the detailed network topology diagram.

Further, the method also relates to a topology analysis system, and there is a plurality of involved DHCP servers; the method further comprises:
the DHCP servers sending the position information of the DHCP client and the intermediate devices and the connection relations between the intermediate devices to the topology analysis system, which draws the detailed network topology diagram based on the position information of the DHCP client and the intermediate devices and the connection relations between the intermediate devices.

Further, the method also relates a topology analysis system; the method further comprises:
the DHCP server sending the physical address of the DHCP client and the information in the DHCP option to the topology analysis system; and
the topology analysis system determining the position information of the DHCP client based on the physical address of the DHCP client and the information in the DHCP option, and determining and storing the plurality of intermediate devices between the DHCP client and the DHCP server and connection relations between the intermediate devices based on the information in the DHCP option; and drawing the detailed network topology diagram based on the stored position information of the DHCP client and the intermediate devices and the connection relations between the intermediate devices.

Further, there is a plurality of involved DHCP servers; the method further comprises:
the topology analysis system drawing the detailed network topology diagram based on the position information of the DHCP client and the intermediate devices and the connection relations between the intermediate devices, which are determined and stored based on the physical address of the DHCP client sent by the plurality of DHCP servers and the information in the DHCP option.

In order to solve the above problem, the present invention provides a system for realizing network topology discovery comprising a dynamic host configuration protocol (DHCP) client, a plurality of intermediate devices and a DHCP server connected successively, wherein:
the DHCP client is configured to initiate a DHCP message request when network services are required to be obtained;
the intermediate devices are configured to record successively address information of the intermediate devices into a DHCP option of a message in a DHCP message request sent by the DHCP client when receiving the message; and
the DHCP server is configured to, when receiving the message, store a physical address of the DHCP client and information in the DHCP option carried in the message, while assigning an IP address to the DHCP client.

Further, the plurality of the intermediate device comprises a first intermediate device and subsequent other intermediate devices.

The first intermediate device is configured to add the DHCP option into the received message, and record port information of the first intermediate device connected to the DHCP client into the first sub-option of the DHCP option, record a physical address of the first intermediate device into the second sub-option of the DHCP option, and record an IP address of the first intermediate device into the fifth sub-option of the DHCP option.

The other intermediate devices are configured to record IP addresses of the other intermediate devices into the fifth sub-option of the DHCP option of the message successively.

Further, the DHCP server is further configured to determine and store position information of the DHCP client based on the physical address of the DHCP client and the information in the DHCP option, and determine and store the plurality of intermediate devices between the DHCP client and the DHCP server and connection relations between the intermediate devices based on the information in the DHCP option.

Further, the DHCP server is further configured to draw a detailed network topology diagram based on the position information of the DHCP client and the intermediate devices and the connection relations between the intermediate devices.

Further, the system further comprises a topology analysis system, and there is a plurality of involved DHCP servers.

The DHCP server is further configured to send the position information of the DHCP client and the intermediate devices and the connection relations between the intermediate devices to the topology analysis system.

The topology analysis system is configured to draw the detailed network topology diagram based on the position information of the DHCP client and the intermediate devices and the connection relations between the intermediate devices, which are determined and stored based on the physical address of the DHCP client sent by the plurality of DHCP servers and the information in the DHCP option.

Using the method and the system for realizing network topology discovery provided by the present invention, in the process where a client sends a DHCP message request to a DHCP server, position information of the client and a mutual connection relation between each network node are obtained by Option82 information carried in the DHCP message and by topology analysis for the message and the Option82 information so as to draw a detailed network topology diagram, thereby achieving the goal of network topology discovery. The present invention is simple to implement, and can be implemented using only each sub-option in the original Option82 of the DHCP conveniently without additional devices, therefore it is suitable for network topology discovery of the LAN, and has high system performance-price ratio. The present invention provides a convenient, rapid and accurate fault location tool for network management.

### Brief Description of Drawings

FIG. 1 is a block diagram of an embodiment of a system for realizing network topology discovery in accordance with the present invention;
FIG. 2 is a flowchart of an embodiment of a method in accordance with the present invention;
FIG. 3 is a schematic diagram of change in Option82 information when a DHCP message passes by each intermediate device; and
FIG. 4 is a flowchart of a method for a topology analysis system to obtain network topology by Option82 information in accordance with an embodiment of the present invention.

### Preferred Embodiments of the Present Invention

The inventive concept of the method and the system for realizing network topology discovery provided by the present invention is that when the client sends a DHCP message request to a DHCP server, it records address information of the client and each device which the message passes by, using a DHCP option carried in the message; when the HCP message finally arrives at a DHCP server, a detailed network topology diagram is drawn based on position information of the client and a mutual connection relation between each network node obtained by network topology analysis, thereby realizing the network topology discovery.

The technical scheme of the present invention is described in detail in conjunction with the accompanying drawings and preferred embodiments below. The following embodiments are only intended to describe and explain the present invention, and not constitute limitations of the technical scheme of the present invention.

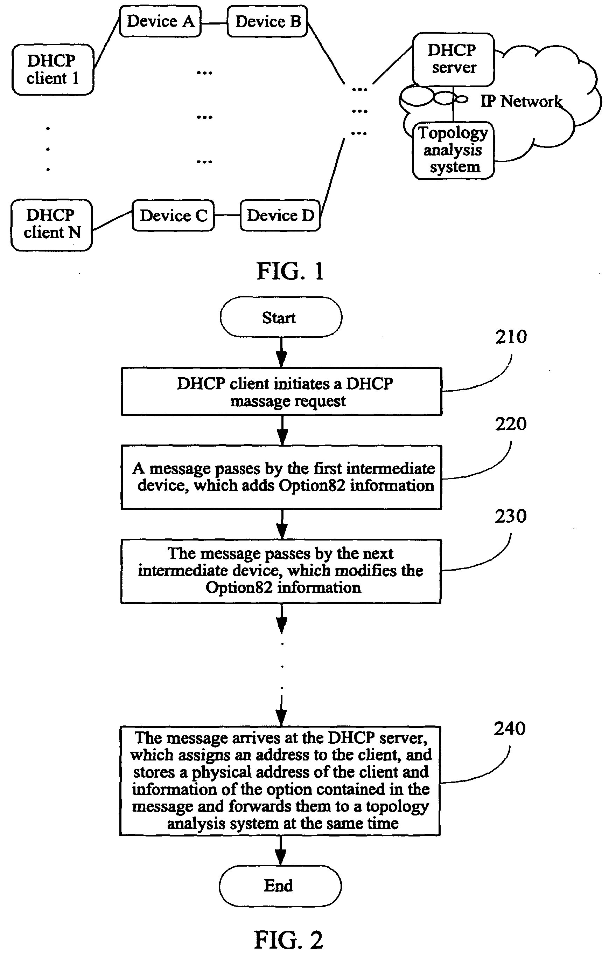

FIG. 1 illustrates a structure of an embodiment of a system for realizing network topology discovery in accordance with the present invention comprising a plurality of clients, a plurality of intermediate devices (device A, device B,...) and one or more DHCP servers (only one of which is shown in FIG. 1) and a topology analysis system; one or more intermediate devices (such as switch, router, etc.) are connected between each client and DHCP server.

The client is configured to send a DHCP message request to the DHCP server when network services are required to be obtained.

The intermediate devices are configured to add and/or fill DHCP option (Option82) information into a DHCP message when receiving the message, and record their address information into the DHCP option successively.

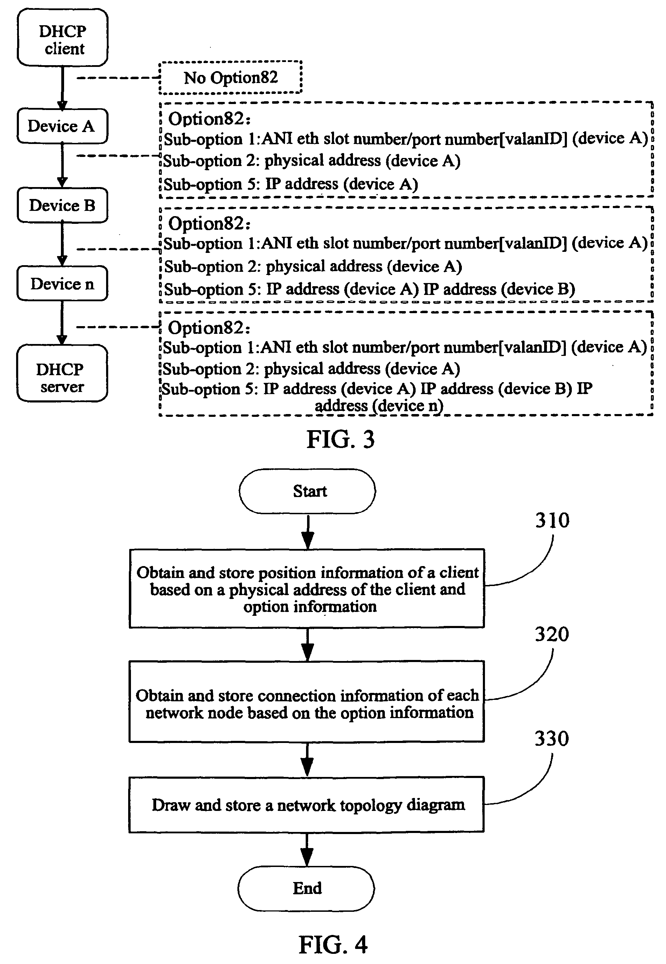

As shown in FIG. 3, when the DHCP message sent by the client passes by the first intermediate device (device A), the device adds Option82 information into the message by device A, the information includes the following sub-options.

Sub-option 1: proxy circuit ID, including a vlan ID, slot number and port number of a port of a switch connected to the client.

Sub-option 2: proxy remote ID, including the physical address of device A.

This physical address is used for determining uniquely the position of device A.

Sub-option 5: link selection, including the IP address of device A.

The DHCP message passes by the second intermediate device (device B), ... the n-th intermediate device (device n) successively, and device B,..., device n fill their IP addresses respectively into the sub-option 5.

The DHCP server is configured to, when receiving the DHCP message, assign an address to the client that sends the message request, while storing the physical address of the client and option information carried in the message, and send them to a topology analysis system connected to the DHCP server;

The topology analysis system is configured to determine position information of the client based on the physical address of the client and the option information, determine the intermediate devices between the client and the DHCP server and connection relations between the intermediate devices based on the option information, and store the position information of the client and the intermediate devices and their connection relations into a data base; and finally draw a detailed network topology diagram based on the position information of the client and the intermediate devices and their connection relations recorded in the data base.

The topology analysis system determines the position information of the client based on the physical address of the client and IP addresses of the first intermediate devices of the sub-option 5, sub-option 1, sub-option 2 in the option information to record into the data base; determines intermediate devices that the DHCP message passes by and connection relations between the intermediate devices based on IP addresses of all devices included in sub-option 5 to record in the data base; enriches constantly the position information of the client in the data base and many devices associated with the client and their connection relations by accumulating information of the client in the message so as to draw a detailed network topology diagram.

In addition to the above-mentioned embodiment of the system, other embodiments may also be presented in the present invention.

For example, the function for the above-mentioned topology analysis system to analyze the physical address of the client and the option information may be achieved by configuring a topology analysis module in the DHCP server, that is to say, this topology analysis module determines the position information of the client based on physical address of the client and the option information stored in the DHCP server and corresponding to the DHCP message, and determines the intermediate devices between the client and the DHCP server and connection relations between the intermediate devices based on this option information, and draws a network topology diagram.

As another example, the above-mentioned topology analysis system may aggregate all network topology diagrams drawn in the DHCP servers connected to the topology analysis system, and analyses these diagrams and finally draws a larger and more complete network topology diagram.

FIG. 2 illustrates a flowchart of an embodiment of a corresponding method given by the above-mentioned embodiment of the system in accordance with the present invention comprises the following steps.

210. A DHCP client initiates a DHCP message request.

The client initiates the DHCP message request to a DHCP server when network services are required to be obtained.

220. A message passes by the first intermediate device, which adds and fills DHCP option (Option82) information.

As shown in FIG. 3, the message passes first by device A, for example, which adds Option82 information into the message, i.e., sub-option information: proxy circuit ID of sub-option 1, including a vlanID, slot number and port number of a port of a switch connected to the client; proxy remote ID of sub-option 2, including the physical address of device A; the link selection of sub-option, including the IP address of device A.

230. The message passes by the next intermediate device, which modifies Option82 information.

The message is transmitted to the next device B by device A, device B fills its IP address into the sub-option 5 in the Option82.

Next, the DHCP message passes by the third intermediate device, ... the n-th intermediate device (device n) successively, these devices fill their IP addresses into the sub-option 5 respectively.

240. The message arrives at the DHCP server, which assigns an address to the client, and stores the physical address of the client and the option information carried in the message, and forwards them to a topology analysis system at the same time, and then the process ends.

FIG. 4 illustrates a flowchart of a method for a topology analysis system to obtain network topology by Option82 information in accordance with an embodiment of the present invention comprising the following steps.

310. Position information of a client is obtained based on the physical address of the client and option information and is stored.

Based on the physical address of the client and IP addresses of the first intermediate devices of sub-option 5, sub-option 1, sub-option 2 in the option information, the position information of the client is determined and is stored.

320. Connection information of each network node is obtained based on the option information and is stored.

Intermediate devices that the message passes by and connection relations between these intermediate devices are determined based on IP addresses of all devices included in the sub-option 5, and are stored.

330. A network topology diagram is drawn and stored, and then the process ends.

Of course, the processes in the FIG. 2 and the FIG. 4 are performed separately in the embodiment, the DHCP server obtains the message and the Option82 information therein, and the topology analysis system obtains network topology by the Option82 information. In fact, the processes in the FIG. 2 and FIG. 4 may be performed in combination, the DHCP server obtains the message and the Option82 information therein, and obtains the position information of the client and the intermediate devices associated with the client and their connection relations based on the address information of the client and the Option82 information so as to draw the network topology diagram.

In the method and the system for realizing network topology discovery provided by the present invention, in the process where a client sends a DHCP message request to a DHCP server, position information of the client and a mutual connection relation between each network node are obtained by Option82 information carried in the DHCP message and by topology analysis for the message and the Option82 information so as to draw a detailed network topology diagram, thereby achieving the goal of network topology discovery. The present invention is simple to implement, and can be implemented using only each sub-option in the original Option82 of the DHCP conveniently without additional devices, therefore it is suitable for network topology discovery of the LAN, and has high system performance-price ratio. The present invention provides a convenient, rapid and accurate fault location tool for network management.

It should be understood that equivalent variations or substitutions may be made by those having ordinary skill in the art according to the technical concept of the present invention, and all the variation or substitution schemes without additional creative work should fall within the protection scope of the appended claims of the present invention.

### Industrial Applicability

Using the method and the system for realizing network topology discovery provided by the present invention, in the process where a client sends a DHCP message request to a DHCP server, position information of the client and a mutual connection relation between each network node are obtained by Option82 information carried in the DHCP message and by topology analysis for the message and the Option82 information so as to draw a detailed network topology diagram, thereby achieving the goal of network topology discovery. The present invention is simple to implement, and can be implemented using only each sub-option in the original Option82 of the DHCP conveniently without additional devices, therefore it is suitable for network topology discovery of the LAN, and has high system performance-price ratio. The present invention provides a convenient, rapid and accurate fault location tool for network management.

## Claims

1. A method for realizing network topology discovery, said method comprising:
a dynamic host configuration protocol, DHCP, client sending (210) a DHCP message request to a DHCP server, a message in the DHCP message request passing by a plurality of intermediate devices; the intermediate devices recording (220, 230) successively address information of the intermediate devices into a DHCP option of the message when receiving the message;
when receiving the message, the DHCP server assigning (240) an IP address to the DHCP client and storing a physical address of the DHCP client and information in the DHCP option carried in the message; and
the DHCP server determining and storing (310) position information of the DHCP client based on the physical address of the DHCP client and the information in the DHCP option, and determining and storing (320) the plurality of intermediate devices between the DHCP client and the DHCP server and connection relations between the intermediate devices based on the information in the DHCP option.

2. The method according to claim 1, wherein the intermediate devices recording successively the address information of the intermediate devices into the DHCP option of the message when receiving the message comprises:
when a first intermediate device which firstly receives the message among the intermediate devices receives the message, the first intermediate device adding the DHCP option into the message, and recording an IP address of the first intermediate device connected to the DHCP client into the fifth sub-option of the DHCP option, in addition to recording port information of the first intermediate device into the first sub-option of the DHCP option and recording a physical address of the first intermediate device into the second sub-option of the DHCP option; and
when other intermediate devices except the first intermediate device receive the message, the other intermediate devices recording IP address of the other intermediate devices into the fifth sub-option of the DHCP option of the message successively.

3. The method according to claim 1 or 2, wherein after the step of the DHCP server determining and storing position information of the DHCP client and determining and storing the intermediate devices and connection relations between the intermediate devices, the method further comprises:
the DHCP server drawing (330) a detailed network topology diagram based on the stored position information of the DHCP client and the intermediate devices and the connection relations between the intermediate devices.

4. The method according to claim 3, wherein the step of the DHCP server drawing (330) the detailed network topology diagram based on the stored position information of the DHCP client and the intermediate devices and the connection relations between the intermediate devices comprises:
the DHCP server sending the position information of the DHCP client and the intermediate devices and the connection relations between the intermediate devices to a topology analysis system, which draws the detailed network topology diagram.

5. The method according to claim 3, wherein
there is a plurality of DHCP servers;
the step of the DHCP server drawing (330) the detailed network topology diagram based on the stored position information of the DHCP client and the intermediate devices and the connection relations between the intermediate devices comprises:
each of the plurality of DHCP servers sending the position information of the DHCP client stored by each of the plurality of DHCP servers and the intermediate devices and the connection relations between the intermediate devices to the topology analysis system, which draws the detailed network topology diagram.

6. The method according to claim 1 or 2, further comprising:
the DHCP server sending (240) the physical address of the DHCP client and the information in the DHCP option to the topology analysis system; and
the topology analysis system determining (310) the position information of the DHCP client based on the physical address of the DHCP client and the information in the DHCP option, and determining and storing (320) the plurality of intermediate devices between the DHCP client and the DHCP server and connection relations between the intermediate devices based on the information in the DHCP option; and drawing (330) the detailed network topology diagram based on the stored position information of the DHCP client and the intermediate devices and the connection relations between the intermediate devices.

7. The method according to claim 6, wherein there is a plurality of DHCP servers;
The step of the topology analysis system drawing (330) the detailed network topology diagram based on the stored position information of the DHCP client and the intermediate devices and the connection relations between the intermediate devices comprises:
the topology analysis system drawing the detailed network topology diagram based on the position information of the DHCP client and the intermediate devices and the connection relations between the intermediate devices, which are determined and stored based on the physical address of the DHCP client stored by each of the plurality of DHCP servers and the information in the DHCP option.

8. A system for realizing network topology discovery comprising a dynamic host configuration protocol, DHCP, client, a plurality of intermediate devices and a DHCP server connected successively, wherein
the DHCP client (1, N) is configured to initiate a DHCP message request when network services are required to be obtained;
**characterized in that**
the intermediate devices (A, B, C, D) are configured to record successively address information of each of the intermediate devices into a DHCP option of a message in a DHCP message request sent by the DHCP client when receiving the message;
the DHCP server is configured to, when receiving the message, store a physical address of the DHCP client and information in the DHCP option carried in the message, while assigning an IP address to the DHCP client; and
the DHCP server is further configured to determine and store position information of the DHCP client based on the physical address of the DHCP client and the information in the DHCP option, and determine and store the intermediate devices between the DHCP client and the DHCP server and connection relations between the intermediate devices based on the information in the DHCP option.

9. The system according to claim 8, wherein the plurality of the intermediate device comprises a first intermediate device and subsequent other intermediate devices,
the first intermediate device is configured to add the DHCP option into the received message, and record port information of the first intermediate device connected to the DHCP client into the first sub-option of the DHCP option, record a physical address of the first intermediate device into the second sub-option of the DHCP option, and record an IP address of the first intermediate device into the fifth sub-option of the DHCP option; and
the other intermediate devices are configured to record IP addresses of the other intermediate devices into the fifth sub-option of the DHCP option of the received message successively.

10. The system according to claim 8 or 9, wherein
the DHCP server is further configured to draw a detailed network topology diagram based on the position information of the DHCP client and the intermediate devices and the connection relations between the intermediate devices.

11. The system according to claim 8 or 9, wherein the system further comprises a topology analysis system, and there is a plurality of involved DHCP servers;
the DHCP server is further configured to send the position information of the DHCP client and the intermediate devices and the connection relations between the intermediate devices to the topology analysis system; and
the topology analysis system is configured to draw the detailed network topology diagram based on the position information of the DHCP client and the intermediate devices and the connection relations between the intermediate devices, which are determined and stored based on the physical address of the DHCP client sent by each of the plurality of DHCP servers and the information in the DHCP option.

## Patentansprüche

1. Verfahren zum Realisieren einer Netztopologiefeststellung,
wobei das Verfahren umfasst, dass:
ein Dynamic Host Configuration Protocol-, DHCP-, Client eine DHCP-Nachrichtenanforderung an einen DHCP-Server sendet (210), wobei eine Nachricht in der DHCP-Nachrichtenanforderung an einer Vielzahl von Zwischeneinrichtungen vorbeigelangt; die Zwischeneinrichtungen eine Adressinformation der Zwischeneinrichtungen erfolgreich in einer DHCP-Option der Nachricht aufzeichnen (220, 230), wenn die Nachricht empfangen wird; wenn die Nachricht empfangen wird, der DHCP-Server dem DHCP-Client eine IP-Adresse zuordnet (240) und eine physikalische Adresse des DHCP-Client und eine Information in der DHCP-Option, die in der Nachricht mitgeführt wird, speichert; und
der DHCP-Server basierend auf der physikalischen Adresse des DHCP-Client und der Information in der DHCP-Option eine Positionsinformation des DHCP-Client ermittelt und speichert (310), und die Vielzahl von Zwischeneinrichtungen zwischen dem DHCP-Client und dem DHCP-Server und Verbindungsbeziehungen zwischen den Zwischeneinrichtungen basierend auf der Information in der DHCP-Option ermittelt und speichert (320).

2. Verfahren nach Anspruch 1,
wobei das erfolgreiche Aufzeichnen der Adressinformation der Zwischeneinrichtungen in der DHCP-Option der Nachricht durch die Zwischeneinrichtungen beim Empfangen der Nachricht umfasst, dass:
wenn eine erste Zwischeneinrichtung, die die Nachricht unter den Zwischeneinrichtungen zuerst empfängt, die Nachricht empfängt, die erste Zwischeneinrichtung die DHCP-Option der Nachricht hinzufügt, und eine IP-Adresse der ersten Zwischeneinrichtung, die mit dem DHCP-Client verbunden ist, in der fünften Unteroption der DHCP-Option aufzeichnet, und zwar zusätzlich zu einem Aufzeichnen einer Portinformation der ersten Zwischeneinrichtung in der ersten Unteroption der DHCP-Option und einem Aufzeichnen einer physikalischen Adresse der ersten Zwischeneinrichtung in der zweiten Unteroption der DHCP-Option; und
wenn andere Zwischeneinrichtungen außer der ersten Zwischeneinrichtung die Nachricht empfangen, die anderen Zwischeneinrichtungen die IP-Adresse der anderen Zwischeneinrichtungen in der fünften Unteroption der DHCP-Option der Nachricht erfolgreich aufzeichnen.

3. Verfahren nach Anspruch 1 oder 2,
wobei das Verfahren ferner umfasst, dass nach dem Schritt, dass der DHCP-Server eine Positionsinformation des DHCP-Client ermittelt und speichert und die Zwischeneinrichtungen und Verbindungsbeziehungen zwischen den Zwischeneinrichtungen ermittelt und speichert:
der DHCP-Server ein detailliertes Netztopologiediagramm basierend auf der gespeicherten Positionsinformation des DHCP-Client und den Zwischeneinrichtungen und den Verbindungsbeziehungen zwischen den Zwischeneinrichtungen zeichnet (330).

4. Verfahren nach Anspruch 3,
wobei der Schritt, dass der DHCP-Server das detaillierte Netztopologiediagramm basierend auf der gespeicherten Positionsinformation des DHCP-Client und den Zwischeneinrichtungen und den Verbindungsbeziehungen zwischen den Zwischeneinrichtungen zeichnet (330), umfasst, dass:
der DHCP-Server die Positionsinformation des DHCP-Client und die Zwischeneinrichtungen und die Verbindungsbeziehungen zwischen den Zwischeneinrichtungen an ein Topologieanalysesystem sendet, das das detaillierte Netztopologiediagramm zeichnet.

5. Verfahren nach Anspruch 3,
wobei es eine Vielzahl von DHCP-Servern gibt;
der Schritt, dass der DHCP-Server das detaillierte Netztopologiediagramm basierend auf der gespeicherten Positionsinformation des DHCP-Client und den Zwischeneinrichtungen und den Verbindungsbeziehungen zwischen den Zwischeneinrichtungen zeichnet (330), umfasst, dass:
jeder der Vielzahl von DHCP-Servern die Positionsinformation des DHCP-Client, die durch jeden der Vielzahl von DHCP-Servern gespeichert wird, und die Zwischeneinrichtungen und die Verbindungsbeziehungen zwischen den Zwischeneinrichtungen an das Topologieanalysesystem sendet, das das detaillierte Netztopologiediagramm zeichnet.

6. Verfahren nach Anspruch 1 oder 2, ferner umfassend, dass:
der DHCP-Server die physikalische Adresse des DHCP-Client und die Information in der DHCP-Option an das Topologieanalysesystem sendet (240); und
das Topologieanalysesystem die Positionsinformation des DHCP-Client basierend auf der physikalischen Adresse des DHCP-Client und der Information in der DHCP-Option ermittelt (310) und die Vielzahl von Zwischeneinrichtungen zwischen dem DHCP-Client und dem DHCP-Server und Verbindungsbeziehungen zwischen den Zwischeneinrichtungen basierend auf der Information in der DHCP-Option ermittelt und speichert (320); und das detaillierte Netztopologiediagramm basierend auf der gespeicherten Positionsinformation des DHCP-Client und den Zwischeneinrichtungen und den Verbindungsbeziehungen zwischen den Zwischeneinrichtungen zeichnet (330).

7. Verfahren nach Anspruch 6,
wobei es eine Vielzahl von DHCP-Servern gibt;
wobei der Schritt, dass das Topologieanalysesystem das detaillierte Netztopologiediagramm basierend auf der gespeicherten Positionsinformation des DHCP-Client und den Zwischeneinrichtungen und den Verbindungsbeziehungen zwischen den Zwischeneinrichtungen zeichnet (330), umfasst, dass:
das Topologieanalysesystem das detaillierte Netztopologiediagramm basierend auf der Positionsinformation des DHCP-Client und den Zwischeneinrichtungen und den Verbindungsbeziehungen zwischen den Zwischeneinrichtungen zeichnet, welche basierend auf der physikalischen Adresse des DHCP-Client, die durch jeden der Vielzahl von DHCP-Servern gespeichert wird, und der Information in der DHCP-Option ermittelt und gespeichert werden.

8. System zum Realisieren einer Netztopologiefeststellung, umfassend einen Dynamic Host Configuration Protocol-, DHCP-, Client, eine Vielzahl von Zwischeneinrichtungen und einen DHCP-Server, die erfolgreich verbunden sind, wobei
der DHCP-Client (1, N) ausgestaltet ist, um eine DHCP-Nachrichtenanforderung zu initiieren, wenn es erforderlich ist, Netzdienste zu erhalten; **dadurch gekennzeichnet, dass**
die Zwischeneinrichtungen (A, B, C, D) ausgestaltet sind, um eine Adressinformation jeder der Zwischeneinrichtungen erfolgreich in einer DHCP-Option einer Nachricht in einer DHCP-Nachrichtenanforderung, die durch den DHCP-Client gesendet wird, aufzuzeichnen, wenn die Nachricht empfangen wird;
der DHCP-Server ausgestaltet ist, um, wenn die Nachricht empfangen wird, eine physikalische Adresse des DHCP-Client und eine Information in der DHCP-Option, die in der Nachricht mitgeführt wird, zu speichern, während dem DHCP-Client eine IP-Adresse zugeordnet wird; und
der DHCP-Server ferner ausgestaltet ist, um eine Positionsinformation des DHCP-Client basierend auf der physikalischen Adresse des DHCP-Client und der Information in der DHCP-Option zu ermitteln und zu speichern und die Zwischeneinrichtungen zwischen dem DHCP-Client und dem DHCP-Server und Verbindungsbeziehungen zwischen den Zwischeneinrichtungen basierend auf der Information in der DHCP-Option zu ermitteln und zu speichern.

9. System nach Anspruch 8,
wobei die Vielzahl der Zwischeneinrichtungen eine erste Zwischeneinrichtung und nachfolgende andere Zwischeneinrichtungen umfasst,
wobei die erste Zwischeneinrichtung ausgestaltet ist, um die DHCP-Option der empfangenen Nachricht hinzuzufügen, und eine Portinformation der ersten Zwischeneinrichtung, die mit dem DHCP-Client verbunden ist, in der ersten Unteroption der DHCP-Option aufzuzeichnen, eine physikalische Adresse der ersten Zwischeneinrichtung in der zweiten Unteroption der DHCP-Option aufzuzeichnen und eine IP-Adresse der ersten Zwischeneinrichtung in der fünften Unteroption der DHCP-Option aufzuzeichnen; und die anderen Zwischeneinrichtungen ausgestaltet sind, um IP-Adressen der anderen Zwischeneinrichtungen in der fünften Unteroption der DHCP-Option der empfangenen Nachricht erfolgreich aufzuzeichnen.

10. System nach Anspruch 8 oder 9,
wobei der DHCP-Server ferner ausgestaltet ist, um ein detailliertes Netztopologiediagramm basierend auf der Positionsinformation des DHCP-Client und den Zwischeneinrichtungen und den Verbindungsbeziehungen zwischen den Zwischeneinrichtungen zu zeichnen.

11. System nach Anspruch 8 oder 9,
wobei das System ferner ein Topologieanalysesystem umfasst und es eine Vielzahl von umfassten DHCP-Servern gibt;
der DHCP-Server ferner ausgestaltet ist, um die Positionsinformation des DHCP-Client und die Zwischeneinrichtungen und die Verbindungsbeziehungen zwischen den Zwischeneinrichtungen an das Topologieanalysesystem zusenden; und
das Topologieanalysesystem ausgestaltet ist, um das detaillierte Netztopologiediagramm basierend auf der Positionsinformation des DHCP-Client und den Zwischeneinrichtungen und den Verbindungsbeziehungen zwischen den Zwischeneinrichtungen zu zeichnen, welche basierend auf der physikalischen Adresse des DHCP-Client, die durch jeden der Vielzahl von DHCP-Servern gesendet wird, und der Information in der DHCP-Option ermittelt und gespeichert werden.

## Revendications

1. Procédé destiné à mettre en oeuvre une découverte de topologie de réseau, ledit procédé comprenant les étapes suivantes :
un client de protocole de configuration dynamique d'hôte, DHCP pour « Dynamic Host Configuration Protocol », envoie (210) une demande de message DHCP à un serveur DHCP, un message contenu dans la demande de message DHCP passant par une pluralité de dispositifs intermédiaires ; les dispositifs intermédiaires enregistrant (220, 230) consécutivement des informations d'adresses des dispositifs intermédiaires dans une option DHCP du message lors de la réception du message ;
lors de la réception du message, le serveur DHCP affecte (240) une adresse IP au client DHCP et stocke une adresse physique du client DHCP et des informations dans l'option DHCP transportée dans le message ; et
le serveur DHCP détermine et stocke (310) des informations de position du client DHCP sur la base de l'adresse physique du client DHCP et des informations contenues dans l'option DHCP, et détermine et stocke (320) la pluralité de dispositifs intermédiaires entre le client DHCP et le serveur DHCP et des relations de connexion entre les dispositifs intermédiaires sur la base des informations contenues dans l'option DHCP.

2. Procédé selon la revendication 1, dans lequel l'enregistrement successif, par les dispositifs intermédiaires, des informations d'adresse des dispositifs intermédiaires dans l'option DHCP du message lors de la réception du message comprend les étapes suivantes :
lorsqu'un premier dispositif intermédiaire qui reçoit en premier le message parmi les dispositifs intermédiaires reçoit le message, le premier dispositif intermédiaire ajoute l'option DHCP au message, et enregistre une adresse IP du premier dispositif intermédiaire connecté au client DHCP dans la cinquième sous-option de l'option DHCP, en plus d'enregistrer des informations de port du premier dispositif intermédiaire dans la première sous-option de l'option DHCP et enregistre une adresse physique du premier dispositif intermédiaire dans la deuxième sous-option de l'option DHCP ; et
lorsque d'autres dispositifs intermédiaires, à l'exception du premier dispositif intermédiaire, reçoivent le message, les autres dispositifs intermédiaires enregistrent consécutivement l'adresse IP des autres dispositifs intermédiaires dans la cinquième sous-option de l'option DHCP du message.

3. Procédé selon la revendication 1 ou 2, dans lequel, après l'étape lors de laquelle le serveur DHCP détermine et stocke des informations de position du client DHCP et détermine et stocke les dispositifs intermédiaires et les relations de connexion entre les dispositifs intermédiaires, le procédé comprend en outre les étapes suivantes :
le serveur DHCP dessine (330) un diagramme de topologie de réseau détaillé sur la base des informations de position stockées du client DHCP et des dispositifs intermédiaires et des relations de connexion entre les dispositifs intermédiaires.

4. Procédé selon la revendication 3, dans lequel l'étape lors de laquelle le serveur DHCP dessine (330) le diagramme de topologie de réseau détaillé sur la base des informations de position stockées du client DHCP et des dispositifs intermédiaires et des relations de connexion entre les dispositifs intermédiaires, comprend les étapes suivantes :
le serveur DHCP envoie les informations de position stockées du client DHCP et les dispositifs intermédiaires et les relations de connexion entre les dispositifs intermédiaires à un système d'analyse de topologie qui dessine le diagramme de topologie de réseau détaillé.

5. Procédé selon la revendication 3, dans lequel :
il existe une pluralité de serveurs DHCP ;
l'étape lors de laquelle le serveur DHCP dessine (330) le diagramme de topologie de réseau détaillé sur la base des informations de position stockées du client DHCP et des dispositifs intermédiaires et des relations de connexion entre les dispositifs intermédiaires, comprend les étapes suivantes :
chacun de la pluralité de serveurs DHCP envoie les informations de position du client DHCP stockées par chacun de la pluralité de serveurs DHCP et les dispositif intermédiaires et les relations de connexion entre les dispositifs intermédiaires au système d'analyse de topologie qui dessine le diagramme de topologie de réseau détaillé.

6. Procédé selon la revendication 1 ou 2, comprenant en outre les étapes suivantes :
le serveur DHCP envoie (240) l'adresse physique du client DHCP et les informations contenues dans l'option DHCP au système d'analyse de topologie ; et
le système d'analyse de topologie détermine (310) les informations de position du client DHCP sur la base de l'adresse physique du client DHCP et des informations contenues dans l'option DHCP, et détermine et stocke (320) la pluralité de dispositifs intermédiaires entre le client DHCP et le serveur DHCP et des relations de connexion entre les dispositifs intermédiaires sur la base des informations contenues dans l'option DHCP ; et dessine (330) le diagramme de topologie de réseau détaillé sur la base des informations de position stockées du client DHCP et des dispositifs intermédiaires et des relations de connexion entre les dispositifs intermédiaires.

7. Procédé selon la revendication 6, dans lequel il existe une pluralité de serveurs DHCP ;
l'étape lors de laquelle le système d'analyse de topologie dessine (330) le diagramme de topologie de réseau détaillé sur la base des informations de position stockées du client DHCP et des dispositifs intermédiaires et des relations de connexion entre les dispositifs intermédiaires, comprend l'étape suivante :
le système d'analyse de topologie dessine le diagramme de topologie de réseau détaillé basé sur les informations de position du client DHCP et des dispositifs intermédiaires et les relations de connexion entre les dispositifs intermédiaires, qui sont déterminées et stockées sur la base de l'adresse physique du client DHCP stockée par chacun de la pluralité de serveurs DHCP et des informations contenues dans l'option DHCP.

8. Système destiné à mettre en oeuvre une découverte de topologie de réseau comprenant un client de protocole de configuration d'hôte dynamique, DHCP pour « Dynamic Host Configuration Protocol », une pluralité de dispositifs intermédiaires et un serveur DHCP connectés consécutivement, dans lequel :
le client DHCP (1, N) est configuré pour émettre une demande de message DHCP lorsque des services de réseau doivent être obtenus ;
**caractérisé en ce que** :
les dispositifs intermédiaires (A, B, C, D) sont configurés pour enregistrer consécutivement des informations d'adresses de chacun des dispositifs intermédiaires dans une option DHCP d'un message contenu dans une demande de message DHCP envoyée par le client DHCP lors de la réception du message ;
le serveur DHCP est configuré, lors de la réception du message, pour stocker une adresse physique du client DHCP et des informations contenues dans l'option DHCP transportée dans le message, tout en affectant une adresse IP au client DHCP ; et
le serveur DHCP est en outre configuré pour déterminer et stocker des informations de position du client DHCP sur la base de l'adresse physique du client DHCP et des informations contenues dans l'option DHCP, et pour déterminer et stocker les dispositifs intermédiaires entre le client DHCP et le serveur DHCP et des relations de connexion entre les dispositifs intermédiaires sur la base des informations contenues dans l'option DHCP.

9. Système selon la revendication 8, dans lequel la pluralité des dispositifs intermédiaires comprend un premier dispositif intermédiaire et d'autres dispositifs intermédiaires suivants ;
le premier dispositif intermédiaire est configuré pour ajouter l'option DHCP au message reçu et enregistrer des informations de port du premier dispositif intermédiaire connecté au client DHCP dans la première sous-option de l'option DHCP, enregistrer une adresse physique du premier dispositif intermédiaire dans la deuxième sous-option de l'option DHCP, et enregistrer une adresse IP du premier dispositif intermédiaire dans la cinquième sous-option de l'option DHCP ; et
les autres dispositifs intermédiaires sont configurés pour enregistrer consécutivement des adresses IP des autres dispositifs intermédiaires dans la cinquième sous-option de l'option DHCP du message reçu.

10. Système selon la revendication 8 ou 9, dans lequel :
le serveur DHCP est en outre configuré pour dessiner un diagramme de topologie de réseau détaillé sur la base des informations de position du client DHCP et des dispositifs intermédiaires et des relations de connexion entre les dispositifs intermédiaires.

11. Système selon la revendication 8 ou 9, le système comprenant en outre un système d'analyse de topologie, et dans lequel il existe une pluralité de serveurs DHCP concernés ;
le serveur DHCP est en outre configuré pour envoyer les informations de position du client DHCP et des dispositifs intermédiaires et les relations de connexion entre les dispositifs intermédiaires au système d'analyse de topologie ; et
le système d'analyse de topologie est configuré pour dessiner le diagramme de topologie de réseau détaillé sur la base des informations de position du client DHCP et des dispositifs intermédiaires et des relations de connexion entre les dispositifs intermédiaires, qui sont déterminées et stockées sur la base de l'adresse physique du client DHCP envoyée par chacun de la pluralité de serveurs DHCP et des informations contenues dans l'option DHCP.
